# EUROPEAN PATENT APPLICATION

(11) **EP 3 065 032 A1**
(43) Date of publication of application: **07.09.2016**
(21) Application number: 14797401.8
(22) Date of filing: 08.05.2014
(51) Int. Cl.: G06F 3/023

(54) **WORD PREDICTION INPUT METHOD AND TERMINAL**

(30) Priority: 01.11.2013 CN 201310535111
(71) Applicant: ZTE Corporation, Shenzhen, Guangdong 518057 (CN)
(72) Inventor: LI, Xiangyang, Shenzhen Guangdong 518057 (CN)
(74) Representative: Potter Clarkson LLP
(86) International application number: PCT/CN2014/077048
(87) International publication number: WO 2014/183587

(57) **Abstract**

A word prediction input method and terminal. The method comprises: performing a search according to an input result to obtain a corresponding predicted word set; displaying, in a first specified region near a corresponding button on a virtual keyboard, each predicted word in the predicted word set; and when it is detected that a predicted word in the first specified region is chosen, inputting the chosen predicted word on the screen. Embodiments of the present invention can achieve rapid input and special input display to enhance user experience.

## Description

### TECHNICAL FIELD

The present disclosure relates to the field of mobile communications, and more particularly, to an associative input method and a terminal.

### BACKGROUND

As mobile phone products are increasingly upgraded, hardware performances of the mobile phones are constantly improved, the processing speed thereof becomes faster and faster, and the processing capacity is increasingly strong. Meanwhile, more and more application programs are installed on the mobile phones. As a result, the mobile phones can process multiple services, and functions of the mobile phones are greatly enhanced.

As the functions of the mobile phones are powerful, multiple intelligent services such as a voice service appear. However, as a basic module of the mobile phones, an input method plays a very important part in users' operation on the mobile phones. To a large extent, accurate, efficient and inerrant text editing of short messages, notepads and agendas and so on still relies on a traditional input method. Therefore, the user experience in the input method has a significant impact on the experience in the whole mobile phones.

With the development of the smart mobile phones, almost all conventional mobile phones are provided with touch-sensitive displays (also known as touch screens or touch panels), and keys for implementing the input method thereof are correspondingly converted from previous hard keys to a virtual keyboard. Moreover, the development of the input method makes a slide input and associative input functions based on words and sentences more and more powerful, and intelligently provides users with multiple choices automatically, thereby providing necessary conditions for fast text input on the mobile phones. However, although the powerful associative input can intelligently provide the users with candidate words, often the users can not complete an input selection without multiple steps including for example operations on a drop-down box due to a limited area of a column of candidate words, which affects the input speed to a certain extent.

### SUMMARY

A technical problem to be solved by the present disclosure is to provide a method of associative input and a terminal so as to achieve the purpose of rapid input.

In order to solve the foregoing technical problems, the present disclosure provides a method of associative input, including:
conducting a search according to an input result to obtain an associative word set;
displaying, in a first designated area nearby a corresponding button on a virtual keyboard, associative words in the associative word set; and
inputting and displaying, when it is detected that one of the associative words in the first designated area is chosen, the chosen associative word on a screen.

In an embodiment, the foregoing method is also characterized in that, the inputting and displaying, when it is detected that one of the associative words in the first designated area is chosen, the chosen associative word on a screen includes:
inputting and displaying, when it is detected that one of the associative words chosen from the first designated area is slidden into a second designated area, the chosen associative word in a text edit box on the screen.

In an embodiment, the foregoing method is also characterized in that, the second designated area includes any one selected from a group including:
a space key area on the virtual keyboard, an enter key area on the virtual keyboard and a text input box area.

In an embodiment, the foregoing method is also characterized in that, the inputting and displaying, when it is detected that one of the associative words in the first designated area is chosen, the chosen associative word on a screen includes:
inputting and displaying, when it is detected that one of the associative words in the first designated area is clicked, the clicked associative word in a text edit box on the screen.

In order to solve the foregoing technical problems, the present disclosure further provides a terminal, including:
a search module configured to conduct a search according to an input result to obtain an associative word set;
a display module configured to display, in a first designated area nearby a corresponding button on a virtual keyboard, associative words in the associative word set; and
an input module configured to input and display, when it is detected that one of the associative words in the first designated area is chosen, the chosen associative word on a screen.

In an embodiment, the foregoing terminal is also characterized in that,
the input module is configured to input and display, when it is detected that one of the associative words chosen from the first designated area is slidden into a second designated area, the chosen associative word in a text edit box on the screen.

In an embodiment, the foregoing terminal is also characterized in that, the second designated area detected by the input module includes any one selected from a group including:
a space key area on the virtual keyboard, an enter key area on the virtual keyboard and a text input box area.

In an embodiment, the foregoing terminal is also characterized in that,
the input module is configured to input and display, when it is detected that one of the associative words in the first designated area is clicked, the clicked associative word in a text edit box on the screen.

In conclusion, according to the method of associative input and the terminal provided by embodiments of the present disclosure, rapid input and special input display manner can be achieved to improve the user experience.

### BRIEF DESCRIPTION OF THE DRAWINGS

FIG. 1 is a flow chart illustrating a method of associative input according to an embodiment of the present disclosure;
FIG. 2 exemplarily illustrates floating effect of associative words in an implementation example of the present disclosure; and
FIG. 3 is a block diagram illustrating a terminal according to an embodiment of the present disclosure.

### DETAILED DESCRIPTION

The following will make a detailed description of the embodiments of the present disclosure with reference to the accompanying drawings. It is to be noted that the embodiments of this application and the features in the embodiments may be arbitrarily combined with each other without conflict.

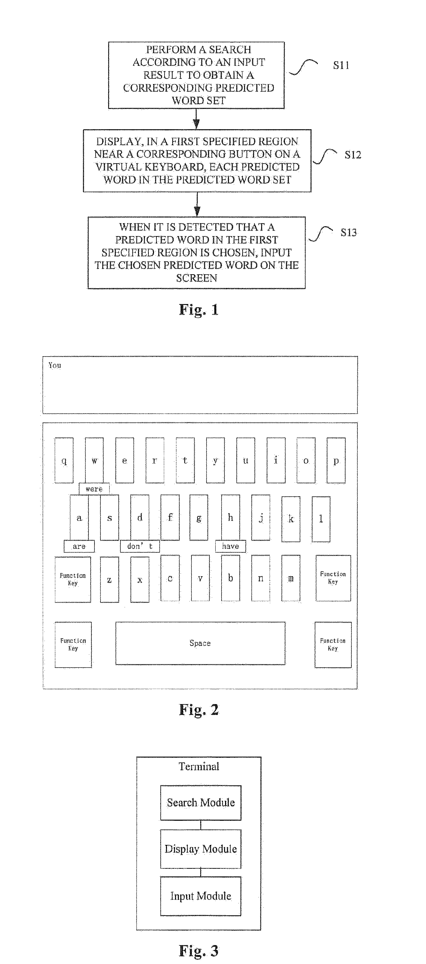

FIG. 1 is a flow chart illustrating a method of associative input according to an embodiment of the present disclosure. As shown in FIG. 1, the method in this embodiment includes following steps.

In S11, a search is conducted according to an input result for obtaining a corresponding associative word set;

In S12, each associative word in the associative word set is displayed in a first designated area nearby a corresponding button on a virtual keyboard.

In S13, when it is detected that an associative word in the first designated area is chosen, the chosen associative word is inputted and displayed on a screen.

When a user uses the input method having an associative function in this embodiment, associative words can be provided according to the user's input through the input method, and the user may conveniently choose at a relatively rapid speed, thereby improving rapidity and efficiency in the whole input process and improving the user experience.

The following shows procedures of the associative input method according to an implementation example of the present disclosure.

In Step 101, a text edit control is activated, such that an input method service is invoked, and a text output result is then obtained according to a clicked button sequence.

In an application program having a text input function, the text edit control (e.g. an Edit Text Widget) is activated. After a click event is sensed by a touch screen, the click event and click-related information may be reported to a system, and a callback is then invoked and the text edit control is set focus (got focused). At the same time of setting focus, an input method service is invoked, and a cursor and a virtual keyboard are popped up and displayed. The virtual keyboard serves as a visual component (e.g. View) of the input method service to be set focus, so that the text edit control is in a ready state for text input.

In Step 102, the obtained text input result serves as an input for an associative word search engine of the input method service, and a corresponding associative word set is then output by conducting a search.

When a button on the virtual keyboard is clicked, the touch screen can report the click event and information on a clicked area to the system. It can be determined that a button K1 is clicked according to a clicked area D1 and a regional arrangement of each button in the keyboard layout of the virtual keyboard. In the same way, a button sequence "A" (K1, K2, K3...) may be obtained after multiple clicks and then used as an input. Accordingly, a corresponding output word result may be acquired from a word getting engine of the input method service. If only one result is acquired, the result may be directly focused and displayed on the screen; and if there are multiple results, the first one may be focused and displayed, while remaining results may serve as candidates in a candidate word column. Therefore, no matter how many results exist, there is at least one result in the state of being selected and focused.

Under the premise where the input method has an associative function, the foregoing focused word may serve as input for the associative search engine of the input method service for searching frequently used words, and an associative word set "W" (W1, W2, W3...) related to the focused word and sorted according to importance and a frequency of use may be thus obtained as an output result.

In Step 103, each word in the obtained associative word set is displayed with a floating effect, according to a corresponding relation between respective words and buttons, nearby a corresponding button on the virtual keyboard.

According to the corresponding relation between each associative word in the foregoing associative word set "W" and each button on the virtual keyboard, the associative word may be displayed with floating effect, in a relatively small size, nearby the corresponding button. In an embodiment, displaying of the associative word depends on a certain keyboard layout. For example, it can be placed under buttons (as shown in FIG. 2), such that the user is able to conduct click and slide operations.

In Step 104, an associative word with determined position in a floating box is directly inputted, by means of a slide operation, and displayed in the text edit box on the screen. Step 102 is then repeated for subsequent input.

The slide input is adopted in this implementation example in order to distinguish from a click input. This is because the user may still input, by clicking on buttons in sequence, a word other than those in the associative word set (the operation may be referred to Step 102 and Step 103), without affecting the user's personalized and arbitrary input.

For implementing the slide input of associative words, a callback "onTouchEvent()" may be invoked by the user's slide movement through sensing of the touch screen and carried with an MotionEvent object of touch information. It can be determined that the slide movement includes MotionEvent and ACTION_MOVE by means of the MotionEvent object, and also an initial coordinate (x0, y0) and a terminated coordinate (x1, y1) of the slide movement are obtained.

For implementing confirmation and recognition of an associative word selected based on the slide movement, two areas S1 and S2 may be defined. In an embodiment, the first area is defined as an area where it is believed a floating associative word nearby a button is clicked, and a boundary thereof may be determined with two points P0 (x00, y00) and P1 (x11, y11). The second area is defined as an area where it is believed that selection of the associative word is confirmed, namely, a sliding terminal area. In an embodiment, the terminal area may be a relatively large key on the virtual keyboard, such as the space key, the enter key and the like. Alternatively, the terminal area may be also a certain special area, for example, a text box control. In the same way, the area may be also determined with two points P2 (x22, y22) and P3 (x33, y33).

When the user slides from a floating associative word box to a designated area, namely, when it is met that x00<x0<x11, y00<y0<y11; and x22<xl<x33, y22<y1<y33, it is believed that the user's slide operation is to select an associative word. Accordingly, it is directly determined to input and display the associative word in the text box on the screen. In an embodiment, this process of displaying may be accompanied by an animation effect such as bubbling to improve the user experience.

After the associative word is inputted and displayed on the screen, a new associative word set may be formed according to the associative word previously inputted and displayed on the screen, and it may be repeated from Step 102.

In the embodiments of the present disclosure, an Android™ terminal operating system is taken as an example, but the present disclosure is not limited thereto, instead, any operating system of electronic equipment may be used. Moreover, in the embodiments, a full qwerty keyboard of English input method is used, but the present disclosure is not limited thereto. Instead, an input method of any language supporting the associative function in any form of keyboard layout may be used.

FIG. 3 is a block diagram illustrating a terminal according to an embodiment of the present disclosure. As shown in FIG. 3, the terminal in this embodiment may include:
a search module configured to conduct a search according to an input result to obtain a corresponding associative word set;
a display module configured to display, in a first designated area nearby a corresponding button on a virtual keyboard, each associative word in the associative word set; and
an input module configured to input and display, when it is detected that an associative word in the first designated area is chosen, the chosen associative word on a screen.

In an embodiment, the input module is further configured to input and display, when it is detected that an associative word chosen from the first designated area is slidden into a second designated area, the chosen associative word in a text edit box on the screen.

The second designated area detected by the input module may include any one of:
a space key area on the virtual keyboard, an enter key area on the virtual keyboard and a text input box area.

In another embodiment, the input module is further configured to input and display, when it is detected that an associative word in the first designated area is clicked on, the clicked associative word in a text edit box on the screen.

It will be appreciated by those skilled in the art that all or a part of steps in the foregoing method may be implemented by instructing related hardware with programs. The programs may be stored in a computer readable medium, such as a red-only memory, a magnetic disc, an optical disc or the like. Alternatively, all or a part of steps in the foregoing embodiments may be also implemented by one or more integrated circuits. Correspondingly, various modules/units in the foregoing embodiments may be implemented in the form of hardware, or be implemented in the form of software function modules. The present disclosure is not limited to combination of hardware and software in any particular form.

The foregoing embodiments are merely embodiments of the present disclosure, and there may be many other embodiments of the disclosure. Various corresponding modifications and transformations can be made by those skilled in the art without departing from the spirit and essence of the present disclosure. Furthermore, these corresponding modifications and transformations shall fall within the protection scope as defined by appended claims of the present disclosure.

### Industrial Applicability

According to the method of associative input and the terminal provided by the embodiments of the present disclosure, rapid input and special input display can be achieved to improve the user experience.

## Claims

1. A method of associative input, comprising:
conducting a search according to an input result for obtaining an associative word set;
displaying, in a first designated area nearby a corresponding button on a virtual keyboard, associative words in the associative word set; and
inputting and displaying, when it is detected that one of the associative words in the first designated area is chosen, the chosen associative word on a screen.

2. The method as claimed in claim 1, wherein the inputting and displaying, when it is detected that one of the associative words in the first designated area is chosen, the chosen associative word on a screen comprises:
inputting and displaying, when it is detected that one of the associative words chosen from the first designated area is slidden into a second designated area, the chosen associative word in a text edit box on the screen.

3. The method as claimed in claim 2, wherein the second designated area comprises any one selected from a group consisting of:
a space key area on the virtual keyboard, an enter key area on the virtual keyboard and a text input box area.

4. The method as claimed in claim 1, wherein the inputting and displaying, when it is detected that one of the associative words in the first designated area is chosen, the chosen associative word on a screen comprises:
inputting and displaying, when it is detected that one of the associative words in the first designated area is clicked, the clicked associative word in a text edit box on the screen.

5. A terminal, comprising:
a search module configured to conduct a search according to an input result to obtain an associative word set;
a display module configured to display, in a first designated area nearby a corresponding button on a virtual keyboard, associative words in the associative word set; and
an input module configured to input and display, when it is detected that one of the associative words in the first designated area is chosen, the chosen associative word on a screen.

6. The terminal as claimed in claim 5, wherein
the input module is configured to input and display, when it is detected that one of the associative words chosen from the first designated area is slidden into a second designated area, the chosen associative word in a text edit box on the screen.

7. The terminal as claimed in claim 6, wherein the second designated area detected by the input module comprises any one selected from a group consisting of:
a space key area on the virtual keyboard, an enter key area on the virtual keyboard and a text input box area.

8. The terminal as claimed in claim 5, wherein
the input module is configured to input and display, when it is detected that one of the associative words in the first designated area is clicked, the clicked associative word in a text edit box on the screen.
